Europäisches Patentamt

European Patent Office

Office européen des brevets

(19)

(11) EP 0 860 796 A1

(12) **DEMANDE DE BREVET EUROPEEN**

(43) Date de publication:
26.08.1998 Bulletin 1998/35

(51) Int Cl.6: **G06T 7/60**

(21) Numéro de dépôt: 98400401.0

(22) Date de dépôt: 19.02.1998

(84) Etats contractants désignés:
AT BE CH DE DK ES FI FR GB GR IE IT LI LU MC
NL PT SE
Etats d'extension désignés:
AL LT LV MK RO SI

(30) Priorité: 20.02.1997 FR 9702011

(71) Demandeur: ALCATEL ALSTHOM COMPAGNIE
GENERALE D'ELECTRICITE
75008 Paris (FR)

(72) Inventeurs:
• Louis, Christian
  91400 Orsay (FR)
• Lechervy, Yves
  91000 Evry (FR)

(74) Mandataire: Fournier, Michel et al
c/o ALCATEL ALSTHOM,
Département de Propriété Industrielle,
30, avenue Kléber
75116 Paris (FR)

(54) **Procédé de détection de structures humaines dans un representation numérique d'un terrain**

(57) Procédé de détection de structures humaines dans une représentation numérique d'un terrain caractérisé en ce que ladite représentation est un modèle numérique de terrain et en ce que ledit procédé comporte les étapes suivantes :

• calcul des isolignes dans ledit modèle numérique de terrain,

• filtrage desdites isolignes selon un critère de taille,
• calcul des isolignes extrémales parmi les isolignes filtrées à l'étape précédente,

L'invention est susceptible de s'appliquer à tout processus mettant en oeuvre une supervision d'un site géographique (planification de réseaux de télécommunication cellulaires par exemple).

FIG. 3

EP 0 860 796 A1

**Description**

La présente invention concerne un procédé d'aide à la détection d'objets de type structures humaines dans un Modèle Numérique de Terrain (MNT).

Le problème de la détection de structures humaines dans une représentation informatique (image, modèle numérique de terrain...) possède de nombreuses applications comme par exemple la planification de réseaux de radiotélécommunication cellulaires.

Un tel réseau comme par exemple un réseau GSM (*Global System for Mobile communication*) comporte une pluralité de stations de base réparties géographiquement. Chacune de ces stations est destinée à la couverture radio d'une zone géographique déterminée appelée cellule.

La zone géographique que couvre effectivement une station de base donnée dépend de l'environnement géographique et en particulier de la présence de structures humaines dans cet environnement. Aussi, afin de disposer de façon optimale les stations de base, c'est-à-dire de sorte qu'un mobile soit toujours en mesure de communiquer avec une station de base, il est nécessaire de connaître l'emplacement de ces structures humaines.

Classiquement, cette analyse du terrain se fait à partir de photographies aériennes ou provenant de satellites, de façon manuelle ou à l'aide d'outils d'aides à la détection.

Ces outils de traitement d'images permettent de différencier par une analyse de classification de textures plusieurs régions dans une image, certaines pouvant par exemple contenir une forte densité de bâtiments, d'autres une faible densité.

Mais, les inconvénients d'une telle approche apparaissent rapidement :

- le procédé ne permet pas d'isoler les bâtiments et ne peut mettre en évidence que des zones. Pour une application de planification de réseau cellulaire, une telle approche est insuffisante.
- il faut de plus que les différences entre les textures des zones soient suffisamment différentes pour qu'un critère de classification puisse s'appliquer,
- enfin, le procédé ne donne aucune indication sur la hauteur des bâtiments ni sur leur forme.

Le but de l'invention est de proposer un procédé palliant ces différentes insuffisances. Plus précisément, le procédé selon l'invention permet de détecter des régions susceptibles de contenir une unique structure humaine et de déterminer la forme et, éventuellement, la hauteur des bâtiments ainsi détectés. Par la suite, ces régions seront appelées régions d'intérêt (ou ROI pour *Regions Of Interest* en anglais).

Le procédé selon l'invention se caractérise en ce qu'il traite en entrée un modèle numérique de terrain qui est une représentation en trois dimensions du terrain et en ce qu'il comporte les étapes suivantes :

- calcul des isolignes sur le modèle,
- filtrage de ces isolignes en fonction d'un critère de taille (périmètre de l'isoligne, volume ou surface décrit par l'isoligne, hauteur...),
- calcul des isolignes extrémales,
- détermination des régions d'intérêt, pouvant contenir une structure humain.

Les différents caractéristiques et avantages apparaîtront de façon plus claire dans la description qui va suivre en référence aux figures.

La figure 1 est un organigramme illustrant l'architecture générale du procédé,
La figure 2 montre un exemple de Modèle Numérique de Terrain (MNT),
La figure 3 montre les isolignes calculées par la première étape du procédé selon l'invention.
La figure 4 illustre le résultat après l'élimination des isolignes ouvertes,
La figure 5 montre le résultat de l'étape de l'algorithme qui consiste à appliquer un filtrage sur les dimensions des isolignes.
La figure 6 montre le résultat de l'étape du procédé qui consiste à ne sélectionner que les isolignes extrémales.
La figure 7 montre le résultat d'une étape optionnelle qui consiste à effectuer un filtrage sur la longueur totale des lignes de crête contenues dans chacune des isolignes et à ne garder les isolignes pour lesquelles cette longueur est supérieure à un certain seuil.
Les figures 8 et 9 illustrent le principe de détermination de la position relative de deux isolignes entre elles.

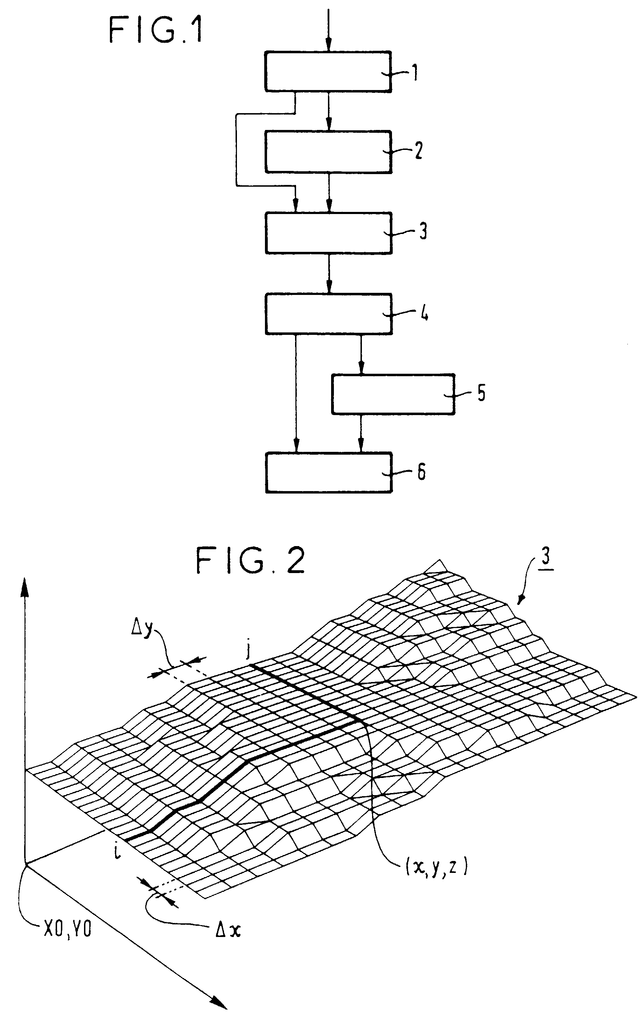

La figure 1 représente sous forme d'organigramme schématique la structure générale du procédé.

Les données traitées par l'algorithme sont des modèles numériques de terrain dont un exemple est montré sur la figure 2.

Un Modèle Numérique de Terrain (MNT ou DEM pour *Digital Elevation* Map en anglais) est une notion bien connue dans le domaine de l'imagerie tridimensionnelle (3D). Il s'agit d'une représentation matricielle et échantillonnée d'un terrain dans laquelle à chaque point de coordonnées i, j, on fait correspondre une hauteur h(i, j).

Les relations qui relient les coordonnées i et j dans le modèle numérique de terrain et les coordonnées x, y, z dans le monde 3D réel sont données par:

$$x = X_0 + i \times \Delta_x$$

$$y = Y_0 + j \times \Delta_y$$

$$z = h(i, j)$$

où $X_0$ et $Y_0$ représentent les coordonnées du point d'origine du modèle numérique de terrain, et $\Delta_x$ et $\Delta_y$ les distances réelles séparant deux échantillons suivant les deux directions du terrain.

La référence 1 représente l'étape de calcul des isolignes sur le modèle numérique de terrain.

Une isoligne est définie comme étant une ligne fermée qui joint des points situés à une même altitude.

Différents procédés peuvent être utilisés pour le calcul des isolignes sur un modèle numérique de terrain. Une méthode à la fois simple et efficace est par exemple décrite dans l'ouvrage de Jean-Laurent Mallet intitulé « Présentation d'un ensemble de méthodes et techniques de la cartographie automatique numérique », paru en octobre 1974 aux annales de l'école nationale supérieure de géologie appliquée et de prospection minière.

Cette étape du procédé selon l'invention consiste donc à calculer les isolignes pour un certain nombre de valeur de la hauteur. Le pas, c'est-à-dire l'intervalle en hauteur (h) séparant deux isolignes consécutives, est réglé en fonction de la hauteur des structures recherchées et de la résolution du modèle numérique de terrain.

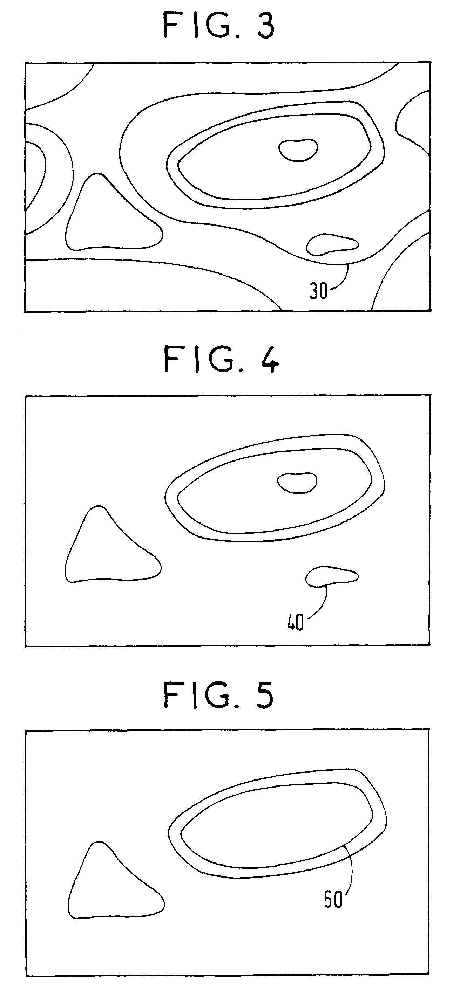

La figure 3 montre les isolignes calculées sur un modèle numérique de terrain par cette étape.

La référence 2 représente l'étape de l'algorithme qui consiste à éliminer les isolignes ouvertes parmi l'ensemble des isolignes calculées à l'étape précédente.

Selon la définition même des isolignes, ces isolignes ouvertes ne devraient pas exister. Elles proviennent en fait d'un effet de bord de l'algorithme : dans la mesure où l'image ne représente qu'une partie d'un monde plus vaste, certains reliefs n'y seront représentés qu'en partie. Il en est bien évidemment de même pour les isolignes correspondantes qui apparaîtront de façon incomplète sur l'image traitée.

Cette étape n'est bien sûr pas obligatoire mais il peut sembler pertinent dans certains cas de ne pas vouloir traiter des isolignes pour lesquelles seule une partie de l'information est disponible.

La figure 4 représente les isolignes restantes après cette étape. On remarque par exemple la suppression de l'isoligne 30, présente sur la figure 3.

La référence 3 sur la figure 1 représente l'étape de l'algorithme qui consiste à filtrer les isolignes selon un critère de taille. Ce critère peut être la longueur de l'isoligne considérée. la surface ou le volume qu'elle décrit, sa hauteur etc.

Le critère choisi pour ce filtrage dépend de la caractérisation que l'on donne d'une structure humaine.

Si l'on caractérise une structure humaine comme étant une structure occupant un espace au sol limité, un critère de type périmètre de l'isoligne ou surface décrite peut être suffisante.

Si l'on est plus exigeant et que l'on suppose qu'une structure humaine doit en plus avoir une hauteur minimale et/ou une hauteur maximale, un critère de type hauteur ou volume décrit par l'isoligne est plus approprié.

Il est de plus possible de combiner plusieurs critères, et de filtrer à la fois sur le volume et sur la hauteur par exemple.

En tout état de cause, tout type de critère de taille peut être utilisé en fonction de l'application du procédé et la portée de l'invention ne saurait être limitée à un critère particulier.

La figure 5 représente un résultat de cette étape appliquée aux isolignes résultantes de l'étape précédente. Ce résultat n'est donné qu'à titre d'exemple puisqu'il dépend du critère choisi ainsi que du seuil par rapport auquel se fait le filtrage. Sur cet exemple, on remarque que l'isoligne 40, présente sur la figure précédente, a disparu car elle ne correspondait pas aux critères. On peut supposer par exemple qu'elle représentait un volume trop réduit pour caractériser une structure humaine.

La référence 4 représente l'étape consistant à sélectionner uniquement les isolignes extrémales parmi l'ensemble des isolignes précédemment calculées et filtrées.

Une isoligne maximale est une isoligne dont la projection sur un plan horizontal (i.e. à hauteur h constante) n'est pas incluse dans la projection d'une autre isoligne.

Dans la suite, par abus de langage, on abandonnera le distinguo entre isoligne et projection de l'isoligne sur un plan horizontal. On dira par exemple qu'une isoligne $I_1$ est comprise dans une autre isoligne $I_2$ lorsque la projection sur un plan horizontal de l'isoligne $I_1$ est à l'intérieur de la projection sur le même plan horizontal de l'isoligne $I_2$.

La recherche des isolignes maximales dans un ensemble d'isolignes amène à comparer les isolignes deux à deux et à tester si l'une est incluse dans l'autre ou non.

Il faut par ailleurs remarquer que le nombre de configurations entre deux isolignes est limité à 2 :

- soit une des isolignes est comprise dans l'autre,
- soit elles sont disjointes.

Le cas où les deux isolignes seraient sécantes est en effet impossible de par les définitions même d'une isoligne et d'un modèle numérique de terrain.

Le problème revient alors à déterminer si une isoligne $I_1$ est ou non incluse dans une isoligne $I_2$. Une méthode pour réaliser pratiquement ce test est de choisir un point quelconque de l'isoligne $I_1$ et de parcourir à partir de ce point une demi-droite quelconque en comptant le nombre de fois que l'on coupe l'autre isoligne $I_2$.

- Si ce nombre est pair (ou nul), $I_1$ n'est pas incluse dans $I_2$.
- Sinon, $I_1$ est incluse dans $I_2$.

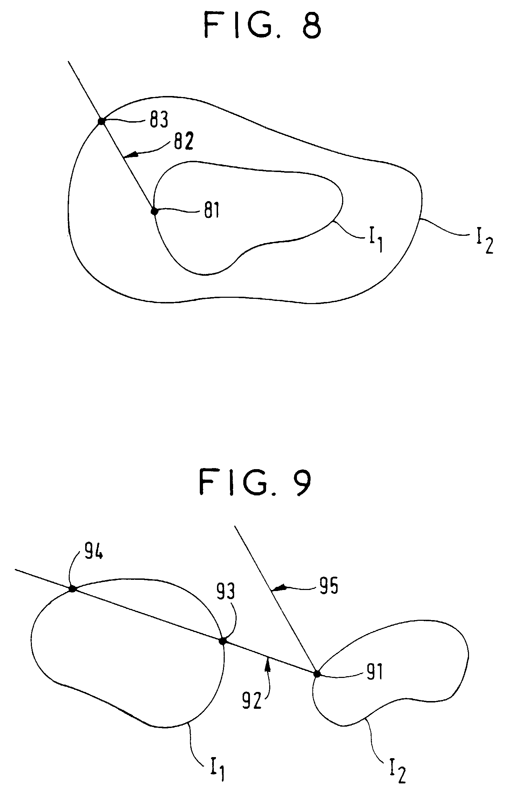

Les figures 8 et 9 illustrent les deux configurations dans lesquelles peuvent se trouver les deux isolignes $I_1$ et $I_2$.

Sur la figure 8, l'isoligne $I_1$ est incluse dans l'isoligne $I_2$. Un point 81 est choisi au hasard sur l'isoligne $I_1$. A partir de ce point, une demi-droite 82 est tracée dans une direction elle aussi choisie au hasard. Cette demi-droite 82 coupe l'isoligne $I_2$ en un point 83 et on en déduit que l'isoligne $I_1$ est incluse dans l'isoligne $I_2$.

La figure 9 illustre la seconde configuration possible. Un point 91 est choisi au hasard sur l'isoligne $I_1$. A partir de ce point, on trace une demi-droite 92 de direction aléatoire. Elle coupe l'isoligne $I_2$ en deux points 93 et 94 et on en déduit donc que l'isoligne $I_1$ n'est pas incluse dans l'isoligne $I_2$.

La référence 95 indique une autre possibilité de choix de la demi-droite. Cette demi-droite ne coupe pas l'isoligne $I_2$ et on déduit, de la même façon, que l'isoligne $I_1$ n'est pas incluse dans l'isoligne $I_2$.

Les isolignes qui résultent de cette étape peuvent être interprétées comme délimitant des régions d'intérêt.

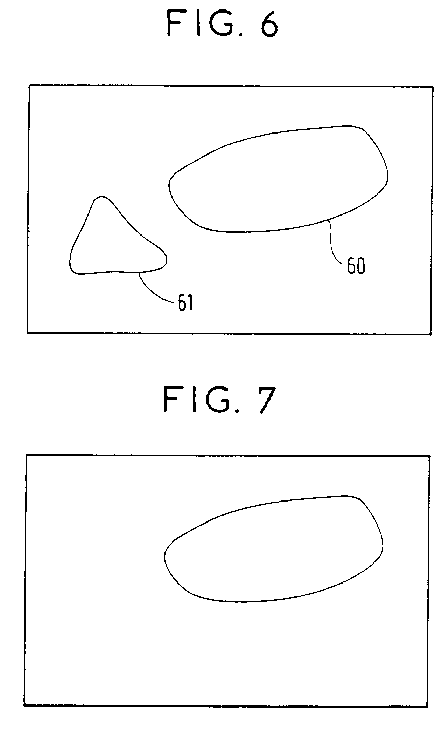

Ainsi, sur la figure 6, l'isoligne 50, présente dans la figure précédente, a disparu car elle était incluse dans l'isoligne 60. Cette dernière isoligne peut être interprétée comme délimitant une structure humaine, de même que l'isoligne 61.

Cependant, à ce stade, certaines configurations naturelles peuvent engendrer des surdétections. Par exemple, une colline ou une forêt peut être détectée comme étant une structure humaine potentielle si elle correspond aux critères de caractérisation de l'étape 2 du procédé, puisque ceux-ci ne portent que sur la taille.

Cette surdétection peut être problématique dans certains cas. On peut alors ajouter une étape supplémentaire au procédé qui consiste à calculer les lignes de crête contenues dans chaque isoligne et à ne sélectionner que celles dont la longueur totale des lignes de crête est supérieure à un certain seuil.

La figure 7 illustre le résultant d'une telle étape. L'isoligne 61 a disparu car la portion de modèle numérique de terrain qu'elle contenait ne comportait pas suffisamment de lignes de crête.

Il est toutefois à noter qu'avec une telle étape, on pourra avoir des problèmes de sous-détection pour des bâtiments ne possédant pas de lignes de crête comme un bâtiment sphérique par exemple. Cette étape ne peut donc être comprise que comme étant optionnelle et fonction des besoins propres d'une application particulière.

Il est à noter que l'expression « ligne de crête » doit être comprise dans son acceptation la plus large ainsi qu'il est communément fait dans ce domaine technique. Cette notion doit en effet recouvrir les « véritables » lignes de crête (maxima de relief) ainsi que les talwegs (minima de relief).

Le calcul des lignes de crête est un problème ardu mais classique de l'imagerie tridimensionnelle. Le lecteur pourra se référer à nombre de document décrivant une telle méthode dont « *The Marching Lines Algorithm* : *new results and proofs* » de Jean-Philippe Thirion et Alexis Gourdon, rapport de recherche de l'INRIA (Institut National de la Recherche en Informatique et Automatique » n°1881 paru en avril 1993, ou l'ouvrage « Vision par ordinateur » écrit par Olivier Monga et Radu Horaud, Traité des nouvelles technologies, série informatique chez Hermès, ou bien encore « *Crest lines extraction in volume 3D medical images* : *a multi-scale approach* » de Olivier Monga, Richard Lengagne et Rachid Deriche, rapport de recherche INRIA n°2338 paru en juillet 1994.

La référence 6 de l'algorithme consiste à délimiter des régions d'intérêt, par exemple volumiques.

En effet, les isolignes résultant de l'étape précédente délimitent des régions d'intérêt suivant les coordonnées i et j du modèle numérique de terrain. Mais il est possible de délimiter les régions d'intérêt suivant la troisième dimension en calculant la hauteur maximale des points contenus dans l'isoligne.

La région d'intérêt est alors un cylindre dont la section est l'isoligne, tronqué par deux plans horizontaux ; la côte du plan supérieure étant égale à cette hauteur maximale et la côte du plan inférieur étant égale à la hauteur de l'isoligne.

Cette étape est bien évidemment optionnelle. Sa présence dépend de l'application que l'on veut faire du procédé ainsi que des éventuelles étapes algorithmiques susceptibles de s'enchaîner à sa suite.

## Revendications

1. Procédé de détection de régions d'intérêt pouvant contenir une structure humaine, dans une représentation d'un terrain, caractérisé en ce que ladite représentation est un modèle numérique de terrain et en ce que ledit procédé comporte les étapes suivantes :

   - calcul des isolignes dans ledit modèle numérique de terrain,
   - filtrage desdites isolignes selon un critère de taille,
   - calcul des isolignes extrémales parmi les isolignes filtrées à l'étape précédente,
   - détermination desdites régions d'intérêt.

2. Procédé selon la revendication 1 caractérisé en ce que ledit procédé comprend à la suite du calcul desdites isolignes extrémales, une étape de calcul de la longueur totale des lignes de crête contenues dans chacune desdites isolignes extrémales, et une étape de filtrage desdites isolignes extrémales en fonction d'une comparaison entre ladite longueur totale et un seuil.

3. Procédé selon l'une des revendications 1 ou 2, caractérisé en ce que chaque région d'intérêt est délimitée :

- par une isoligne résultant de la dernière étape dudit procédé,
- par le plan horizontal contenant ladite isoligne,
- par le plan horizontal contenant le point de hauteur maximum contenu dans ladite isoligne.

4. Procédé selon l'une des revendications précédentes, caractérisé en ce que ladite étape de calcul des isolignes est immédiatement suivie d'une étape d'élimination des isolignes ouvertes parmi lesdites isolignes.

# FIG.1

# FIG.2

# FIG. 3

30

# FIG. 4

40

# FIG. 5

50

# FIG. 6

# FIG. 7

# FIG. 8

# FIG. 9

**Office européen des brevets**

# RAPPORT DE RECHERCHE EUROPEENNE

Numéro de la demande

EP 98 40 0401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SATOSHI SUZUKI ET AL: "MARIS: MAP RECOGNITION INPUT SYSTEM" PATTERN RECOGNITION, vol. 23, no. 8, 1 janvier 1990, pages 919-933, XP000107916 * abrégé * * alinéa 3.5; figures 13,18 * | 1-4 | G06T7/60 |
| A | JISMALM G ET AL: "CELL PLANNING - PRODUCTS AND SERVICES" ERICSSON REVIEW, vol. 67, no. 2, 1 janvier 1990, pages 84-91, XP000165457 * page 88 - page 89, alinéa "TOP" * * figure 7 * | 1-4 | |
| A | COX K C ET AL: "RAPID SEARCH FOR SPHERICAL OBJECTS IN AERIAL PHOTOGRAPHS" PROCEEDINGS OF THE CONFERENCE ON COMPUTER VISION AND PATTERN RECOGNITION, ANN ARBOR, JUNE 5 - 9, 1988, no. -, 5 juin 1988, INSTITUTE OF ELECTRICAL AND ELECTRONICS ENGINEERS, pages 905-910, XP000092643 * abrégé * * alinéa 1 * | 1-4 | |

**DOMAINES TECHNIQUES RECHERCHES (Int.Cl.6)**

G06T
G06K

Le présent rapport a été établi pour toutes les revendications

| Lieu de la recherche | Date d'achèvement de la recherche | Examinateur |
|---|---|---|
| BERLIN | 12 mai 1998 | Jonsson, P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)